Europäisches Patentamt

European Patent Office

Office européen des brevets

(19)

(11) Numéro de publication : **0 121 006**
**B1**

(12)

# FASCICULE DE BREVET EUROPÉEN

(45) Date de publication du fascicule du brevet :
28.05.86

(51) Int. Cl.⁴ : **B 63 B 15/00, B 63 B 35/82**

(21) Numéro de dépôt : 83201445.0

(22) Date de dépôt : 10.10.83

(54) Dispositif de réglage de l'emplanture du mât d'une planche à voile ou similaire.

(30) Priorité : 28.03.83 BE 2060063

(43) Date de publication de la demande :
10.10.84 Bulletin 84/41

(45) Mention de la délivrance du brevet :
28.05.86 Bulletin 86/22

(84) Etats contractants désignés :
AT CH DE FR GB IT LI LU NL SE

(56) Documents cités :
EP-A- 0 087 120
DE-A- 3 115 837
FR-A- 2 409 185
US-A- 3 787 004

(73) Titulaire : FABRIQUE NATIONALE HERSTAL en
abrégé FN Société Anonyme

B-4400 Herstal (BE)

(72) Inventeur : Dumortier, Thierry Maurice
Rue de Fexhe Slins 47
B-4481 Hermee (BE)

(74) Mandataire : Donné, Eddy
M.F.J.Bockstael Arenbergstraat 13
B-2000 Anvers (BE)

Jouve, 18, rue St-Denis, 75001 Paris, France

## Description

La présente invention concerne un dispositif de réglage de l'emplanture du mât d'une planche à voile ou similaire.

On sait que la position occupée par l'emplanture du mât sur une coque influence considérablement le comportement de l'embarcation et ceci en fonction de différents paramètres, tels que poids de l'utilisateur, caractéristiques de la voile, force du vent, état de l'eau naviguée, etc...

Pour cette raison, on a déjà proposé d'équiper la coque d'au moins deux logements distincts pour l'emplanture du mât. Cette solution ne permet, bien entendu, aucun réglage fin. Elle est, en outre, pratiquement inutilisable en cours de navigation, par exemple en régate.

Des progrès ont été réalisés grâce à des dispositifs permettant de faire varier longitudinalement la position de l'emplanture du mât (DE-A-3115837). Ces dispositifs connus sont relativement complexes, onéreux, et souvent d'un maniement malaisé en cours de navigation.

Le but de la présente invention est de fournir une solution particulièrement efficace et économique au problème susdécrit.

A cet effet, l'invention consiste en un dispositif comprenant : un curseur destiné à recevoir le pied de mât, ce curseur étant associé à une glissière fixable à la coque de la planche ; un moyen de verrouillage par friction agissant sur ledit curseur pour l'immobiliser par rapport à ladite glissière et un organe de commande prévu pour faire varier la friction exercée par ledit moyen de verrouillage sur le curseur de façon à permettre le déplacement de ce dernier par rapport à ladite glissière (EP-A-0087120 appartenant à l'état de la technique selon l'Art. 54 (3), CBE), ledit moyen de verrouillage étant constitué d'un bout fixé par l'une de ses extrémités à une extrémité de ladite glissière, frappé d'un tour mort au moins sur un axe prévu à cet effet sur ledit curseur et fixé en son autre extrémité à l'organe de commande.

Pour plus de clarté, un exemple non limitatif de réalisation de l'invention est décrit ci-après avec référence aux dessins schématiques annexés, dans lesquels :

la figure 1 est une vue latérale d'une planche à voile ;

la figure 2 est une vue à échelle agrandie de la partie indiquée en F2 à la figure 1 ;

la figure 3 est une coupe selon la ligne III-III de la figure 2 ; et

la figure 4 est une vue similaire à celle de la figure 2, d'une autre position caractéristique du dispositif selon l'invention.

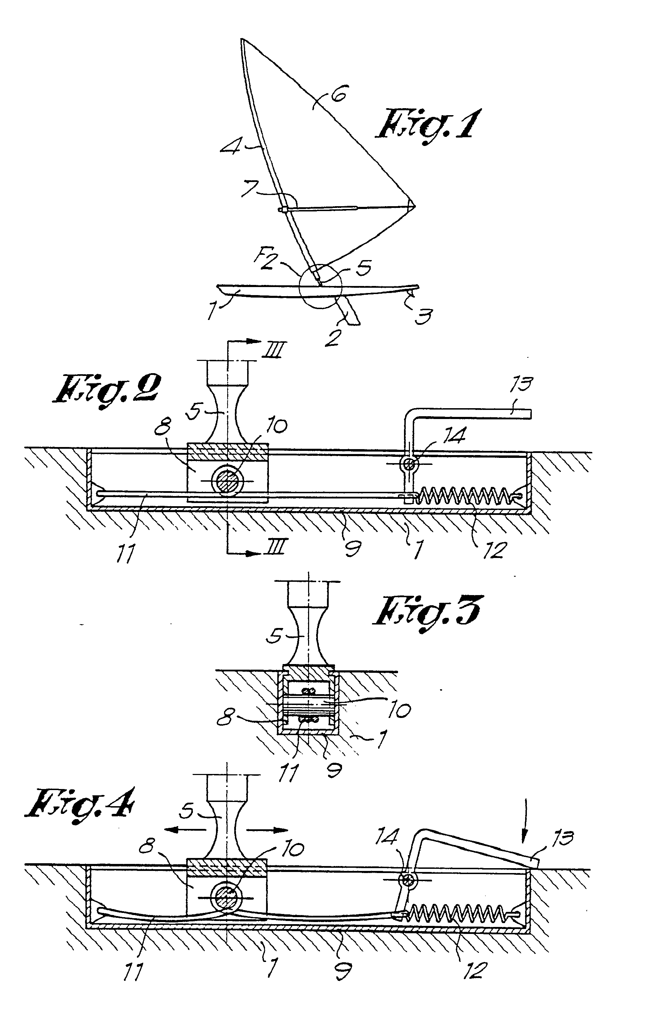

La planche représentée à la figure 1 est d'un type tout à fait classique, ladite figure n'étant donnée que pour situer l'invention.

La planche est principalement constituée par une coque ou flotteur 1 muni d'une dérive 2 et d'ailerons 3.

Un mât 4 peut être fixé de façon amovible à la coque, à l'intervention d'un pied de mât constitué, par exemple, par un diabolo 5 en élastomère ou par un cardan. Ce mât 4 supporte une voile 6 tendue par un wishbone 7. Toutes ces dispositions sont bien connues.

Le dispositif selon l'invention (figures 2 à 4) comprend un curseur 8 logé dans une glissière 9. Ce curseur est destiné à être fixé de façon amovible au pied de mât 5 (par vissage, système à baïonnette ou similaire, moyens non représentés pour la clarté du dessin).

La glissière 9 est solidarisée à la coque 1 et est, de préférence, noyée dans cette dernière.

Le curseur 8 présente, en coupe transversale, une forme substantiellement en U. Un axe 10 s'étend entre les deux ailes du curseur, auxquelles il est rigidement fixé en ses extrémités.

Un boût de verrouillage 11 s'étend dans la glissière 9, une extrémité de ce boût étant fixée à l'extrémité avant (la plus proche de l'étrave de la coque 1) de la glissière 9 et son autre extrémité à un ressort de traction 12 fixé par ailleurs à l'extrémité arrière de la glissière. Entre ses deux extrémités, le boût 11 est frappé de deux tours morts sur l'axe 10.

Un organe ou pédale de commande 13, en forme de levier coudé, est pivotée en 14 sur ladite glissière.

L'une des branches dudit levier pénètre dans la glissière 9 où elle engage l'extrémité du ressort 12 à laquelle est fixé le boût 11.

Dans la position représentée à la figure 2, la traction exercée par le ressort 12 sur le boût 11 est telle que la friction entre ce dernier et l'axe 10 verrouille le curseur 8, empêchant ainsi tout déplacement de ce dernier dans la glissière 9.

Si l'on fait basculer le levier 13, par exemple d'une pression du pied, on étire le ressort 12, ce qui donne du mou au boût 11 et, partant, réduit la friction entre celui-ci et l'axe 10. Le curseur peut alors être déplacé dans le sens et de la distance désirés. Dès que cesse la poussée exercée par l'utilisateur sur le levier 13, le dispositif revient dans l'état de la figure 2, à la position du curseur près.

On voit donc que le dispositif susdécrit est extrêmement simple, peu onéreux, et d'un maniement particulièrement aisé et rapide. Le réglage de la position de l'emplanture du mât peut être extrêmement fin.

## Revendications

1. Dispositif de réglage de l'emplanture du mât d'une planche à voile ou similaire, comprenant un curseur destiné à recevoir le pied de mât, ce curseur étant associé à une glissière fixable à la coque de la planche, un moyen de verrouillage par friction agissant sur ledit curseur pour l'immobiliser par rapport à ladite glissière, un organe de commande étant prévu pour faire varier la friction exercée par ledit moyen de verrouillage sur le curseur de façon à permettre le déplacement de ce dernier par rapport à ladite glissière, ledit moyen de verrouillage étant constitué d'un boût (11) fixé par l'une de ses extrémités à une extrémité de ladite glissière (9), frappé d'un tour mort au moins, sur un axe (10) prévu à cet effet sur ledit curseur (8) et fixé en son autre extrémité, à l'organe de commande (13-14).

2. Dispositif selon la revendication 1, caractérisé en ce que l'autre extrémité dudit boût (11) est fixée à l'organe de commande (13-14) par l'intervention d'un ressort de traction (12).

3. Dispositif selon la revendication 2, caractérisé en ce que ledit organe de commande est constitué par un levier coudé (13) pivoté sur ladite glissière (9) et dont l'une des branches s'étend hors de cette dernière, l'autre branche s'étendant dans la glissière et attaquant l'extrémité dudit ressort (12) à laquelle est attaché ledit boût (11).

### Claims

1. Device for adjusting the insertion of the mast of a surfing board or the like, comprising a cursor for receiving the mastfoot, said cursor being associated with a sliding element that can be fixed to the hull of the board, frictional locking means acting on said cursor for immobilising it with respect to said sliding element, an operating element being provided for varying the friction exerted by said locking means on the cursor so as to make possible the displacement of the latter with respect to said sliding element, said locking means consisting of a cord (11) fixed at one of its ends to an end of said sliding element (9), wound by at least one round turn on an axle (10) provided for that purpose on said carrier (8) and fixed with its other end to the operating element (13-14).

2. Device according to claim 1, characterised thereby that the other end of said cord (11) is fixed to said operating element (13-14) by means of a draw spring (12).

3. Device according to claim 2, characterised thereby that said operating element consists of a knee lever (13) swivelling on said sliding element (9) and one of the arms of which extending outside the latter, the other arm extending in the sliding element and moving the end of said spring (12) to which said cord (11) is fixed.

### Patentansprüche

1. Mastspurregelvorrichtung für Segelbretter u. dgl., bestehend aus einem dem Mastfuß aufnehmenden, mit einer am Segelbrettkörper befestigten Gleitbahn zusammenwirkenden Schlitten, einem auf diesem Schlitten zwecks Festsetzung desselben in bezug auf die Gleitbahn einwirkenden Reibungsverriegelungsmittel und einem Steuermittel für die Variation der durch das vorgenannte Verriegelungsmittel auf den Schlitten, zwecks Ermöglichung der Verschiebung desselben in bezug auf die Leitbahn, ausgeübten Reibung, wobei dieses Verriegelungsmittel aus einem einerseits an einem Ende der Gleitbahn (9), mittels wenigstens eines Rundschlags auf einer dazu auf dem Schlitten (8) angeordneten Spindel (10) und anderseits am Steuermittel (13, 14) befestigten Vorsprung (11) besteht.

2. Mastspurregelvorrichtung gemäß dem Anspruch 1, dadurch gekennzeichnet, daß das andere Ende des vorgeannten Vorsprunges (11) mittels einer Zugfeder (12) am vorgenannten Steuermittel (13, 14) befestigt ist.

3. Mastspurregelvorrichtung gemäß dem Anspruch 2, dadurch gekennzeichnet, daß das vorgenannte Steuermittel aus einem an der vorgenannten Gleitbahn (9) angelenkten Kniehebel (13) besteht, wovon der eine Schenkel sich außerhalb der Gleitbahn (9) erstreckt und der andere, sich innerhalb der Gleitbahn erstreckende Schenkel auf das mit dem vorgenannten Vorsprung (11) verbundene Ende der vorgenannten Zugfeder (12) einwirkt.

Fig.1

Fig.2

Fig.3

Fig.4